# EUROPÄISCHE PATENTSCHRIFT

(11) **EP 1 074 452 B1**
(45) Veröffentlichungstag und Bekanntmachung des Hinweises auf die Patenterteilung: **02.11.2005**
(21) Anmeldenummer: 00110866.1
(22) Anmeldetag: 23.05.2000
(51) Int. Cl.: B62D 15/02

(54) **Lenkwinkelsensor**
Steering angle sensor
Capteur de l'angle de braquage

(30) Priorität: 31.07.1999 DE 19936246; 01.03.2000 DE 10009798
(43) Veröffentlichungstag der Anmeldung: 07.02.2001
(73) Patentinhaber: Valeo Schalter und Sensoren GmbH, 74321 Bietigheim-Bissingen (DE)
(72) Erfinder: Ruff, Achim, 74354 Besigheim (DE); Wigger, Bernd, 74366 Kirchheim (DE)
(74) Vertreter: Dreiss, Fuhlendorf, Steimle & Becker

(56) Entgegenhaltungen:
- DE-A- 4 228 719
- DE-A- 19 712 869
- FR-A- 2 780 157

## Beschreibung

Die Erfindung betrifft einen Lenkwinkelsensor, insbesondere zur Bestimmung des Lenkwinkels eines Fahrzeuges, mit den Merkmalen des Oberbegriffs des Anspruchs 1.

Dabei ist das Codierelement vorzugsweise mit dem Lenkrad bzw. der Lenksäule des Fahrzeugs drehfest gekoppelt. Auf diese Weise kann von der Drehbewegung des Codierelements auf die Lenkradstellung geschlossen werden. Derartige Lenkwinkelsensoren werden benötigt für z.B. Regeleinrichtungen zur Regelung der Fahrstabilität von Fahrzeugen.

Als Schwierigkeit hat sich herausgestellt, dass das Lenkrad mehrere Umdrehungen machen muss, um die insgesamt mögliche Schwenkbewegung der lenkenden Fahrzeugräder durchzuführen. Es ist somit nicht nur wichtig, die den Drehwinkel des Lenkrades zu kennen, sondern es muss auch die Anzahl der Umdrehungen des Lenkstocks gegenüber einer Nulllage bekannt sein, um den Schwenkwinkel der Lenkräder eindeutig bestimmen zu können.

Aus dem Stand der Technik sind Schrittschaltwerke mit Zählern bekannt, welche in Abhängigkeit von den Umdrehungen des Lenkrades bzw. der Lenksäule schrittweise vorwärts oder rückwärts geschaltet werden, so dass die Zahl der gegen eine Nullstellung bestehenden Umdrehungen des Lenkrades bzw. der Lenksäule stets bekannt ist.

Aus der DE-A-197 12 869 und der DE-A-42 28 719 ist jeweils ein Lenkwinkelsensorsystem bekannt geworden, bei dem mittels Sensoren die Daten von zwei Codeelementen erfasst und ausgewertet werden. Die Winkelauflösung derartiger Systeme ist aber nicht fein genug.

Der vorliegenden Erfindung liegt die Aufgabe zugrunde, auf ein besonderes Schrittschaltwerk zur Bestimmung der momentan gültigen Umdrehungszahl des Lenkrades bzw. der Lenksäule zu verzichten und die Messung und Bestimmung der Umdrehung in den eigentlichen Lenkwinkelsensor zu integrieren, wobei eine möglichst feine Auflösung des Winkels erzielt werden soll.

Diese Aufgabe wird erfindungsgemäß mit einem Lenkwinkelsensor gelöst, der die Merkmale des Anspruchs 1 aufweist.

Dabei weist ein erstes auf einer Kreisscheibe liegendes Codierelement vorzugsweise zwölf Codespuren und jede Codespur 720 äquidistante Spurelemente entlang einer vollen Lenkrad- bzw. Lenksäulenumdrehung auf. Ferner weist ein weiteres auf der Kreisscheibe liegendes Codierelement vorzugsweise vier Codespuren auf, deren Spurenelemente alle 180° wechseln. Diese Anordnung hat sich als vorteilhaft ergeben, insbesondere in Verbindung mit dem ersten Codierelement mit 12 Codespuren und 720 Spurelementen. Durch eine solche Einteilung des Codes kann eine Winkelauflösung von 0,5° erreicht werden.

Der erfindungsgemäße Lenkwinkelsensor weist dabei den Vorteil auf, dass aufgrund des aus den einzelnen Codeworten zusammengesetzten Codewortes bei Vorliegen eines entsprechenden Codes auf den Codierelementen keine Wiederholung des Codewortes nach einer vollen Umdrehung des Lenkrades erfolgt.

Bei einer besonders vorteilhaften Ausgestaltung der Erfindung sind die Codierelemente nebeneinander bewegbar angeordnet, wobei lediglich eine ortsfest angeordnete Abtasteinheit die Codierelemente zeitgleich abtastet. Eine solche Anordnung weist den Vorteil auf, dass nur eine Abtasteinheit zur Abtastung der beiden sich unterschiedlich schnell bewegenden Codierelemente benötigt wird.

Eine Weiterbildung der Erfindung sieht vor, dass die Codierelemente konzentrisch nebeneinander in einer Kreisscheibenebene oder nebeneinander auf einer Zylindermantelfläche angeordnet sind, dessen Längsachse vorzugsweise der Lenkraddrehachse bzw. Lenksäulenlängsachse entspricht. Damit wird eine sehr platzsparende Anordnung der Codierelemente erreicht, welche außerdem auf einfache Weise mit dem Lenkrad bzw. der Lenksäule gekoppelt werden kann.

Vorteilhafterweise wird nach einer Variante der Erfindung ein Codierelement maximal einmal bei der maximal möglichen Anzahl der Lenkradumdrehungen gedreht. Dadurch wird erreicht, dass jedes auf diesem Codierelement vorhandene Einzelcodewort nur einmal über die möglichen Lenkradumdrehungen als Bestandteil des Codewortes Verwendung findet. Aus solch einem Codierelement mit zugehörigem Einzelcodewort kann insbesondere die Anzahl der vollen Drehungen des Lenkrades bestimmt werden.

Nach einer Weiterbildung der Erfindung sind zwischen den Codierelementen untereinander und/oder zwischen dem Lenkrad bzw. der Lenksäule und den Codierelementen Getriebe vorhanden. Durch eine solche Anordnung der Getriebe wird eine unterschiedliche Geschwindigkeit der einzelnen Codierelemente bzw. der Codierelemente und der Lenkraddrehung bewirkt.

Eine Variante der Erfindung sieht vor, dass der Code der Codierelemente im Wesentlichen nebeneinander liegende, eine Schrittweite aufweisende Codespuren aufweist, dass die einzelnen Codespuren aus den die einzelnen Bits generierenden Spurelementen zusammengesetzt sind und dass die Abtasteinheit quer zu den Codespuren angeordnet ist. Dadurch wird eine günstige und vorteilhafte Anordnung vorgeschlagen, insbesondere bei Verwendung von lediglich einer Abtasteinheit zur Abtastung von mehreren Codierelementen.

Eine vorteilhafte Variante der Erfindung sieht vor, dass innerhalb einer Codespur wenigstens zwei oder mehr gleiche Spurelemente aufeinander folgen. Dadurch werden sehr feine, schmutz- und staubanfällige Strukturen auf dem Codierelement vermieden, die insbesondere auch aufwendig zu fertigen sind.

Nach einer Weiterbildung der Erfindung unterscheiden sich unmittelbar benachbarte Codeworte lediglich um ein Bit. Damit liegt bei einer Änderung eines Bits eines Codewortes entweder ein benachbartes gültiges Codewort oder ein ungültiges Codewort vor. Damit kann ein Fehler in einem Codewort auf einfache Weise erkannt werden.

Bei einer anderen Weiterbildung der Erfindung sind die Codeworte lediglich aus verschiedenen Bits, d.h. nicht nur aus 1 oder 0, zusammengesetzt. Ein Auslassen dieser Codeworte dient zur Vermeidung möglicher Abtastfehler.

Nach einer anderen Ausgestaltung der Erfindung wiederholen sich während der maximalen Umdrehung des Lenkrades bzw. der Lenksäule die Codeworte nicht. Damit kann eine eindeutige Zuordnung eines bestimmten Codewortes zu einem bestimmten Schwenkwinkel der lenkenden Fahrzeugräder gewährleistet werden.

Eine Variante der Erfindung sieht vor, dass die Abtasteinheit ein lineares Sensorarray ist und pro Codespur wenigstens ein Sensor zur Abtastung vorhanden ist. Bei der Verwendung von mehreren Sensoren zur Abtastung derselben Codespuren wird eine Redundanz erreicht, mittels der ein Ausfall der einzelnen Sensorelemente detektierbar ist.

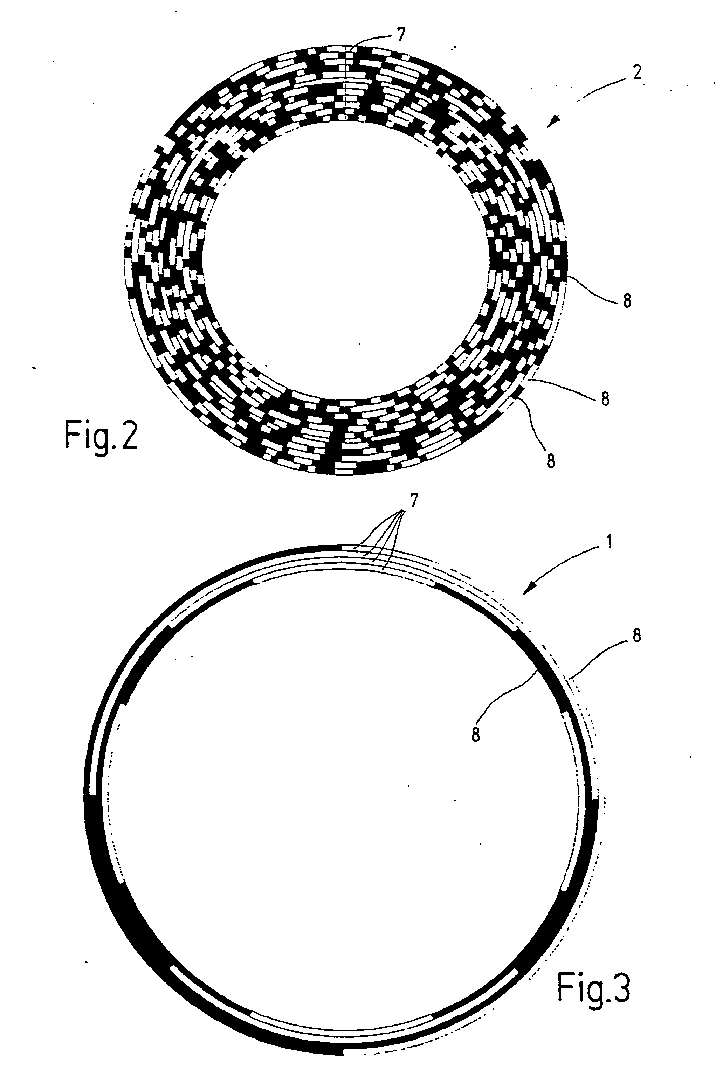

Nach einer anderen Ausgestaltung der Erfindung ist vorgesehen, dass der Code des ersten auf einer Kreisscheibe liegenden Codierelements dem in Figur 2 dargestellten Code entspricht. Insbesondere ein solcher Code hat sich als sehr vorteilhaft und funktionssicher erwiesen.

Bei einer Weiterbildung der Erfindung entspricht der Code des weiteren Codierelements dem in Figur 3 dargestellten Code. Auch ein solcher Code ist für einen erfindungsgemäßen Lenkwinkelsensor sehr geeignet.

Andere Ausgestaltungen der Erfindung sehen vor, dass die Abtastung optisch, magnetisch oder induktiv erfolgt. Solche bzw. Lenksäulenumdrehung auf. Durch eine solche Einteilung des Codes kann eine Winkelauflösung von 0,5° erreicht werden.

In Weiterbildung der Erfindung weist ein weiteres auf der Kreisscheibe liegendes Codierelement vorzugsweise vier Codespuren auf, deren Spurenelemente alle 180° wechseln. Diese Anordnung hat sich als vorteilhaft ergeben, insbesondere in Verbindung mit dem ersten Codierelement mit zwölf Codespuren und 720 Spurelementen.

Nach einer anderen Ausgestaltung der Erfindung ist vorgesehen, dass der Code des ersten auf einer Kreisscheibe liegenden Codierelements dem in Figur 2 dargestellten Code entspricht. Insbesondere ein solcher Code hat sich als sehr vorteilhaft und funktionssicher erwiesen.

Bei einer Weiterbildung der Erfindung entspricht der Code des weiteren Codierelements dem in Figur 3 dargestellten Code. Auch ein solcher Code ist für einen erfindungsgemäßen Lenkwinkelsensor sehr geeignet.

Andere Ausgestaltungen der Erfindung sehen vor, dass die Abtastung optisch, magnetisch oder induktiv erfolgt. Solche Arten der Abtastung sind funktionssicher und kostengünstig zu realisieren.

Nach einer Variante der Erfindung sind die Codespuren durchleuchtbar ausgestaltet. Eine solche Durchleuchtbarkeit ist insbesondere dann notwendig, wenn die Abtastung nach dem Durchlichtprinzip erfolgt.

Bei einer Weiterbildung der Erfindung sind zur optischen Abtastung des Codes Lichtleiter und/oder LEDs vorhanden, die ggf. eine definierte Taktung aufweisen. Eine solche Taktung, bei welcher die Lichtquelle idealerweise nur für sehr kurze Zeit angeschaltet wird, weist insbesondere den Vorteil auf, dass eine Stromersparnis bei der Anwendung des Durchlichtprinzips erreicht wird.

Weitere vorteilhafte Ausgestaltungen und Einzelheiten der Erfindung sind der folgenden Beschreibung zu entnehmen, in der die Erfindung anhand des in der Zeichnung dargestellten Ausführungsbeispiels näher beschrieben und erläutert ist.

Es zeigen:
- Figur 1: einen Lenkwinkelsensor mit zwei Codierelementen,
- Figur 2: den Code eines inneren Codierelements und
- Figur 3: den Code eines äußeren Codierelements.

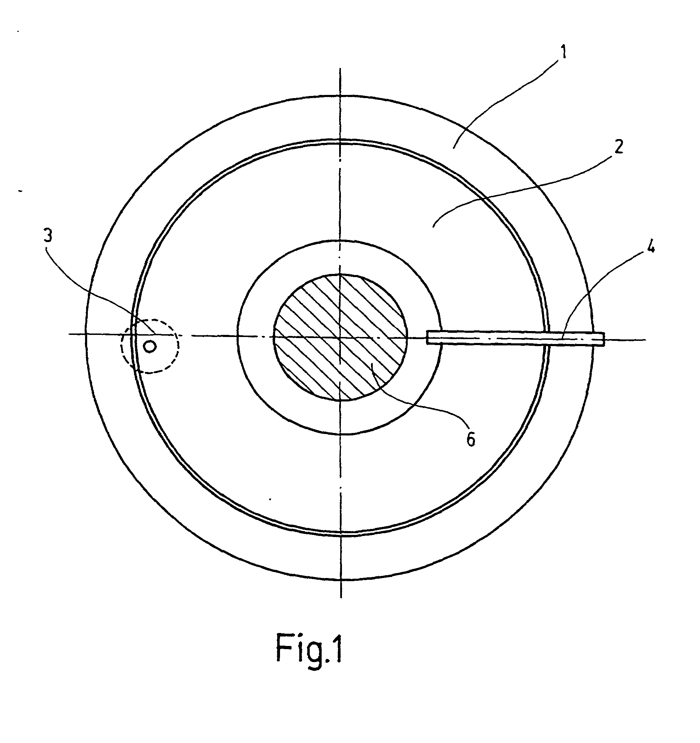

In der Figur 1 ist ein Lenkwinkelsensor, insbesondere zur Bestimmung des Lenkwinkels eines Fahrzeuges, mit zwei Codierelementen 1 und 2 dargestellt, die konzentrisch nebeneinander auf einer Kreisscheibe angeordnet sind, wobei deren Mittelpunkt in der Lenkradachse bzw. Lenksäulenachse liegt. Das Codierelement 2 umgibt dabei die im Querschnitt dargestellte Lenksäule 6, mit der das Codierelement 2 drehfest verbunden ist. Zwischen dem Codierelement 1 und 2 ist ein Getriebe 3 vorhanden, durch welches das Codierelement 1 über das mit der Lenksäule 6 drehfest verbundene Codierelement 2 angetrieben wird. Die beiden nebeneinander bewegbar angeordneten Codierelemente 1 und 2 bewegen sich aufgrund einer entsprechenden Übersetzung des Getriebes 3 unterschiedlich schnell. Zur Abtastung der auf den beiden Codierelementen 1 und 2 vorhandenen Codes ist eine Abtasteinheit 4 vorhanden, welche in Form eines linearen Sensorarrays die beiden Codierelemente 1 und 2 zeitgleich abtastet.

In der Figur 1 ist das Codierelement 2 exemplarisch ohne einem darauf vorhandenen Code dargestellt. Die Figur 2 zeigt einen möglichen Code des mit der Lenksäule 6 drehfest gekoppelten Codierelement 2. Zu sehen sind 12 konzentrisch nebeneinander liegende Codespuren 7, die verschiedene Spurelemente 8 aufweisen. Der Code nach Figur 2 weist dabei die Eigenschaft auf, dass nebeneinander liegende Codeworte sich lediglich um ein Bit unterscheiden, dass Codeworte, die aus gleichen Bits zusammengesetzt sind, ausgespart sind und dass die Spurelemente 8 der Codespuren 7 zwar aus gleichen Einzelspurelementen gebildet werden, aber durch Aneinanderreihung mehrerer gleicher Einzelspurelemente nicht äquidistant sind.

Durch eine solche Art der Codierung des Codierelements 2 ist die Möglichkeit der Fehlererkennung innerhalb einer Umdrehung des Lenkrades gegeben.

Auf dem außen liegenden, über das Getriebe 3 mit dem Codierelement 2 gekoppelten Codierelement 1 sind, wie in Figur 3 dargestellt, beispielsweise vier kreisförmige Codespuren 7 angeordnet. Die Figur 1 zeigt das Codierlement 2 ohne Codespuren. Anders als die Spurelemente 8 des Codierelements 2 sind die Spurelemente 8 des Codierelements 1 innerhalb der einzelenen Codespuren 7 gemäß Figur 3 äquidistant angeordnet. Bei einer gemeinsamen Abtastung der beiden Codierelemente 1 und 2 durch die Abtasteinheit 4 kann auch eine Fehlerekennung für das äußere Codierelement 1 vorgenommen werden.

Das in Figur 1 dargestellte Getriebe 3 ist dabei so ausgelegt, dass das Codierelement 1 bei der maximal möglichen Anzahl der Lenkradumdrehungen lediglich einmal gedreht wird. Das Codierelement 1 dient dabei zur Detektion der Anzahl der absoluten Lenkradumdrehungen.

Die Abtasteinheit 4 ist erfindungsgemäß so dimensioniert, dass sie die Codespuren beider Codierelemente 1 und 2 abtastet. Dabei besteht die Abtasteinheit 4 beispielsweise aus ingesamt 32 Einzelsensoren, wobei jeweils zwei Einzelsensoren einer der insgesamt 16 Codespuren, vier Codespuren auf Codierelement 1 und zwölf Codespuren auf Codierelement 2, zugeordnet sind. Damit wird in der Abtastung der einzelnen Codespuren auf dem Codierelement eine Redundanz erreicht, wodurch der Ausfall eines Einzelsensors detektierbar ist.

Beim Einschalten des Lenkwinkelsensors kann mit der Information aus den beiden Einzelcodewörtern der beiden Codierelemente 1 und 2 das Codewort gebildet werden, aus welchem unmittelbar der Schwenkwinkel der lenkenden Fahrzeugräder ermittelt werden kann. Damit entfällt das Vorhandensein einer Initialisierungsphase des Lenkwinkelsensors.

Bei der Ausführung der Abtasteinheit 4 als optisches Array kann mit der Eigenschaft, dass bei der Abtastung des Codeworts über der Sensoreinheit nur für eine kurze Zeit belichtet wird, eine Lichtquelle idealerweise nur für sehr kurze Zeit angeschaltet werden. Bei entsprechend kurzen Belichtungszeiten kann eine vergleichsweise große Lichtmenge dazu verwendet werden. Eine solche Taktung der Lichtquelle hat den Vorteil, dass zur Abtastung realtiv wenig Strom benötigt wird, wodurch eine Messung des Lenkwinkels auch bei abgeschalteter Fahrzeugzündung denkbar ist.

Bei Verwendung des Durchlichtprinzips ist ein Umlenken und Auffächern des Lichtbündels über einen Lichtleiter von der beispielsweise unten liegenden Lichtquelle über das Codierelement denkbar, wobei die Möglichkeit geschaffen werden kann, unabhängig von der Codierelementenstellung mit einer zusätzlichen Lichtquelle die gesamte Abtasteinheit 4 zu beleuchten. Dadurch kann die Funktion der Abtasteinheit 4, nämlich des Sensorarrays, unabhängig von der Codescheibenposition überprüft werden.

Das Getriebe 3 kann als herkömmliches Zahnradgetriebe oder auch als Planetengetriebe ausgebildet sein.

Bei einer optischen Abtastung durch die Abtasteinheit 4 kann sowohl das Durchlicht- als auch das Reflexlichtverfahren zur Anwendung kommen. Die Informationen des Sensorarrays können je nach Anzahl der Sensorelemente entweder seriell oder parallel ausgelesen werden. Die Verarbeitung der Abtastsignale sowie die Ansteuerung der Lichtquellen erfolgt über einen Mikrocontroller.

Denkbar ist auch, dass das drehfest mit der Lenksäule 6 verbundene Codierelement 2 außen liegt, und das innen liegende Codierelement über ein Getriebe von dem außen liegenden angetrieben wird. Dies hat zum Vorteil, dass die zur absoluten Winkelmessung notwendigen, relativ feinen Winkelsegmente, auf dem äußeren Codierelement größer ausgestaltet werden können.

Innerhalb einer Codespur 7 sollte darauf geachtet werden, dass keine Spurelementfolgen entstehen, die sehr feine Strukturen in der Codespur 7 notwendig machen. Dies kann dadurch erreicht werden, dass innerhalb einer Codespur 7 wenigstens zwei oder mehr gleiche Einzelspurelemente aufeinander folgen. Damit werden sehr feine, schmutzempfindliche und schwer fertigbare Strukturen vermieden.

## Patentansprüche

1. Lenkwinkelsensor, insbesondere zur Bestimmung des Lenkwinkels eines Fahrzeuges, mit einem einen Code aufweisenden Codierelement (2), wobei der Code aus einzelnen Codeworten und die Codeworte aus einzelnen Bits zusammengesetzten sind, und mit einer die Codeworte abtastenden Abtasteinheit (4), wobei jeweils einem Codewort ein Lenkwinkel zugeordnet ist und der Lenkwinkel aus dem abgetasteten Codewort bestimmt wird, wobei wenigstens ein weiteres Codierelement (1) mit zugehöriger Abtasteinheit vorhanden ist, und die wenigstens beiden Codierelemente (1, 2) bzw. Abtasteinheiten (4) aufgrund einer Lenkwinkeländerung unterschiedlich schnell bewegt werden und wobei sich das Codewort aus den Einzelcodeworten der wenigstens beiden Codierelemente (1, 2) zusammensetzt, **dadurch gekennzeichnet, dass** ein erstes auf einer Kreisscheibe liegendes Codierelement (2) vorzugsweise 12 Codespuren und jede Codespur 720 vorzugsweise äquidistante Spurelemente entlang einer vollen Lenkrad- bzw. Lenksäulendrehung aufweist, und dass ein weiteres auf der Kreisscheibe liegendes Codierelement (1) vorzugsweise 4 Codespuren aufweist, deren Spurelemente alle 180° wechseln.

2. Lenkwinkelsensor nach Anspruch 1, **dadurch gekennzeichnet, dass** die Codierelemente (1, 2) nebeneinander bewegbar angeordnet sind und dass die Abtasteinheit (4) ortsfest angeordnet ist, um die Codierelemente zeitgleich abzutasten.

3. Lenkwinkelsensor nach Anspruch 1 oder 2, **dadurch gekennzeichnet, dass** die Codierelemente (1, 2) konzentrisch nebeneinander in einer Kreisscheibenebene oder nebeneinander auf einer Zylindermantelfläche angeordnet sind, dessen Längsachse vorzugsweise der Lenkrad- bzw. der Lenksäulenachse entspricht.

4. Lenkwinkelsensor nach Anspruch 3, **dadurch gekennzeichnet, dass** ein Codierelement (1) maximal einmal bei der maximal möglichen Anzahl der Lenkradumdrehungen gedreht wird.

5. Lenkwinkelsensor nach einem der vorhergehenden Ansprüche, **dadurch gekennzeichnet, dass** zwischen den Codierelementen (1, 2) untereinander und/oder zwischen dem Lenkrad bzw. der Lenksäule (6) und den Codierelementen Getriebe (3) vorhanden sind.

6. Lenkwinkelsensor nach einem der vorhergehenden Ansprüche, **dadurch gekennzeichnet, dass** der Code der Codierelemente (1, 2) im Wesentlichen nebeneinander liegende Codespuren (7) aufweist, dass die einzelnen Codespuren (7) aus die einzelnen Bits generierenden Spurelementen (8) zusammengesetzt sind und dass die Abtasteinheit (4) quer zu den Codespuren (7) angeordnet ist.

7. Lenkwinkelsensor nach einem der vorhergehenden Ansprüche, **dadurch gekennzeichnet, dass** innerhalb einer Codespur (7) wenigstens zwei oder mehr gleiche Spurelemente (8) aufeinander folgen.

8. Lenkwinkelsensor nach einem der vorhergehenden Ansprüche, **dadurch gekennzeichnet, dass** sich unmittelbar benachbarte Codeworte lediglich um ein Bit unterscheiden.

9. Lenkwinkelsensor nach einem der vorhergehenden Ansprüche, **dadurch gekennzeichnet, dass** die Codeworte lediglich aus verschiedenen Bits, d.h. nicht nur aus 1 oder 0, zusammengesetzt sind.

10. Lenkwinkelsensor nach einem der vorhergehenden Ansprüche, **dadurch gekennzeichnet, dass** sich während der maximalen Umdrehung des Lenkrades bzw. der Lenksäule (6) die Codeworte nicht wiederholen.

11. Lenkwinkelsensor nach einem der vorhergehenden Ansprüche, **dadurch gekennzeichnet, dass** die Abtasteinheit (4) ein lineares Sensorarray ist und pro Codespur wenigstens ein Sensor zur Abtastung vorhanden ist.

12. Lenkwinkelsensor nach einem der vorhergehenden Ansprüche, **dadurch gekennzeichnet, dass** der Code des ersten auf einer Kreisscheibe liegenden Codierelements (2) 12 konzentrisch nebeneinander liegende Codespuren (7), die verschiedene Spurelemente (8) aufweisen, enthält.

13. Lenkwinkelsensor nach einem der vorhergehenden Ansprüche, **dadurch gekennzeichnet, dass** der Code des weiteren Codierelements (1) 4 kreisförmige Codespuren (7) aufweist.

14. Lenkwinkelsensor nach einem der vorhergehenden Ansprüche, **dadurch gekennzeichnet, dass** die Abtastung optisch, magnetisch oder induktiv erfolgt.

15. Lenkwinkelsensor nach einem der vorhergehenden Ansprüche, **dadurch gekennzeichnet, dass** die Codespuren (7) durchleuchtbar ausgestaltet sind.

16. Lenkwinkelsensor nach einem der vorhergehenden Ansprüche, **dadurch gekennzeichnet, dass** zur optischen Abtastung des Codes Lichtleiter und/oder LED's vorhanden sind, die ggf. eine definierte Taktung aufweisen.

## Claims

1. Steering angle sensor, in particular for determining the steering angle of a vehicle, comprising a coding element (2) having a code, the code being composed of individual code words, and the code words of individual bits and comprising a scanning unit (4) scanning the code words, in each case a steering angle being coordinated with a code word and the steering angle being determined from the scanned code word, at least one further coding element (1) with associated scanning unit being present, and the at least two coding elements (1, 2) or scanning units (4) being moved at different speeds on the basis of a change of steering angle, and the code word being composed of the individual code words of the at least two coding elements (1, 2), **characterized in that** a first coding element (2) present on a circular disc preferably has 12 code tracks and each code track has 720, preferably equidistant, track elements along a full steering wheel or steering column revolution, and **in that** a further coding element (1) present on the circular disc preferably has 4 code tracks, the track elements of which change every 180°.

2. Steering angle sensor according to Claim 1, **characterized in that** the coding elements (1, 2) are arranged so as to be movable side by side, and **in that** the scanning unit (4) is arranged in a stationary manner in order to scan the coding elements simultaneously.

3. Steering angle sensor according to Claim 1 or 2, **characterized in that** the coding elements (1, 2) are arranged concentrically side by side in a circular disc plane or side by side on a lateral surface of a cylinder, the longitudinal axis of which preferably corresponds to the steering wheel axis or the steering column axis.

4. Steering angle sensor according to Claim 3, **characterized in that** a coding element (1) is rotated not more than once during the maximum possible number of steering wheel revolutions.

5. Steering angle sensor according to any of the preceding Claims, **characterized in that** gears (3) are present between the coding elements (1, 2) and/or between the steering wheel or the steering column (6) and the coding elements.

6. Steering angle sensor according to any of the preceding Claims, **characterized in that** the code of the coding elements (1, 2) has code tracks (7) located substantially side by side, **in that** the individual code tracks (7) are composed of track elements (8) generating the individual bits, and **in that** the scanning unit (4) is arranged transversely to the code tracks (7).

7. Steering angle sensor according to any of the preceding Claims, **characterized in that** at least two or more identical track elements (8) follow one another within a code track (7).

8. Steering angle sensor according to any of the preceding Claims, **characterized in that** directly adjacent code words differ only by one bit.

9. Steering angle sensor according to any of the preceding Claims, **characterized in that** the code words are composed merely of different bits, i.e. not only of 1 or 0.

10. Steering angle sensor according to any of the preceding Claims, **characterized in that** the code words do not repeat during the maximum revolution of the steering wheel or of the steering column (6).

11. Steering angle sensor according to any of the preceding Claims, **characterized in that** the scanning unit (4) is a linear sensor array, and at least one sensor for scanning is present per code track.

12. Steering angle sensor according to any of the preceding Claims, **characterized in that** the code of the first coding element (2) present on a circular disc contains 12 code tracks (7) which are arranged concentrically side by side and have different track elements (8).

13. Steering angle sensor according to any of the preceding Claims, **characterized in that** the code of the further coding element (1) has 4 circular code tracks (7).

14. Steering angle sensor according to any of the preceding Claims, **characterized in that** the scanning is effected optically, magnetically or inductively.

15. Steering angle sensor according to any of the preceding Claims, **characterized in that** the code tracks (7) are designed so as to be transilluminatable.

16. Steering angle sensor according to any of the preceding Claims, **characterized in that** optical fibres and/or LEDs which optionally have a defined timing are present for optical scanning of the code.

## Revendications

1. Capteur d'angle de direction, en particulier pour la détermination de l'angle de direction d'un véhicule, avec un élément codeur (2) présentant un code, dans lequel le code se compose de mots de code individuels et les mots de code se composent de bits individuels, et avec un module de balayage (4) balayant les mots de code, dans lequel un mot de code est affecté respectivement à un angle de direction et l'angle de direction est déterminé à partir du mot de code balayé, dans lequel au moins un autre élément codeur (1) avec un module de balayage correspondant est présent et les au moins deux éléments codeurs (1, 2) ou modules de balayage (4) se déplacent à des vitesses différentes suite à une variation de l'angle de direction et dans lequel le mot de code se compose des mots de code individuels des au moins deux éléments codeurs (1, 2), **caractérisé en ce qu'**un premier élément codeur (2) placé sur un disque présente de préférence 12 pistes de code et chaque piste de code présente de préférence 720 éléments de piste équidistants sur un tour complet du volant ou de la colonne de direction et **en ce qu'**un autre élément codeur (1) placé sur le disque présente de préférence 4 pistes de code dont les éléments de piste changent tous les 180°.

2. Capteur d'angle de direction selon la revendication 1, **caractérisé en ce que** les éléments codeurs (1, 2) sont disposés de manière mobile l'un à côté de l'autre et **en ce que** le module de balayage (4) est monté à poste fixe afin de balayer de manière isochrone les éléments codeurs.

3. Capteur d'angle de direction selon la revendication 1 ou la revendication 2, **caractérisé en ce que** les éléments codeurs (1, 2) sont disposés concentriquement l'un à côté de l'autre dans le plan d'un disque ou sur la surface d'enveloppe d'un cylindre dont l'axe longitudinal correspond de préférence à l'axe du volant ou à l'axe de la colonne de direction.

4. Capteur d'angle de direction selon la revendication 3, **caractérisé en ce qu'**un élément codeur (1) tourne au maximum une fois sur le nombre maximal possible de tours du volant.

5. Capteur d'angle de direction selon l'une des revendications précédentes, **caractérisé en ce qu'**il est prévu des engrenages (3) entre les éléments codeurs (1, 2) eux mêmes et/ou entre le volant ou la colonne de direction (6) et les éléments codeurs.

6. Capteur d'angle de direction selon l'une des revendications précédentes, **caractérisé en ce que** le code des éléments codeurs (1, 2) présente des pistes de code (7) disposées sensiblement les unes à côté des autres, **en ce que** les pistes de code (7) individuelles se composent d'éléments de piste (8) générant les bits individuels et **en ce que** le module de balayage (4) est disposé transversalement par rapport aux pistes de code (7).

7. Capteur d'angle de direction selon l'une des revendications précédentes, **caractérisé en ce qu'**au moins deux ou plusieurs éléments de piste (8) identiques se suivent à l'intérieur d'une piste de code (7).

8. Capteur d'angle de direction selon l'une des revendications précédentes, **caractérisé en ce que** des mots de code immédiatement voisins ne diffèrent que d'un seul bit.

9. Capteur d'angle de direction selon l'une des revendications précédentes, **caractérisé en ce que** les mots de code se composent uniquement de bits différents, c'est-à-dire pas seulement de 1 ou de 0.

10. Capteur d'angle de direction selon l'une des revendications précédentes, **caractérisé en ce que** les mots de code ne se répètent pas pendant la rotation maximale du volant ou de la colonne de direction (6).

11. Capteur d'angle de direction selon l'une des revendications précédentes, **caractérisé en ce que** le module de balayage (4) est un réseau de capteurs linéaire et en qu'il y a au moins un capteur par piste de code pour le balayage.

12. Capteur d'angle de direction selon l'une des revendications précédentes, **caractérisé en ce que** le code du premier élément codeur (2) placé sur un disque contient 12 pistes de code (7) disposées concentriquement les unes à côté des autres et présentant les différents éléments de piste (8).

13. Capteur d'angle de direction selon l'une des revendications précédentes, **caractérisé en ce que** le code de l'autre élément codeur (1) présente 4 pistes de code circulaires (7).

14. Capteur d'angle de direction selon l'une des revendications précédentes, **caractérisé en ce que** le balayage est optique, magnétique ou inductif.

15. Capteur d'angle de direction selon l'une des revendications précédentes, **caractérisé en ce que** les pistes de code (7) sont réalisées de façon à permettre un éclairage par transmission.

16. Capteur d'angle de direction selon l'une des revendications précédentes, **caractérisé en ce que**, pour le balayage optique du code, il est prévu des guides de lumière et/ou des LED qui présentent le cas échéant une synchronisation définie.
